# EUROPÄISCHE PATENTSCHRIFT

(11) **EP 0 355 487 B1**
(45) Veröffentlichungstag und Bekanntmachung des Hinweises auf die Patenterteilung: **16.06.1993**
(21) Anmeldenummer: 89114130.1
(22) Anmeldetag: 31.07.1989
(51) Int. Cl.: H04M 3/56

(54) **Verfahren zur Durchführung von Konferenzverbindungen in einem rechner gesteuerten Kommunikationssystem, insbesondere einem Key-Kommunikationssystem**
Method for the realization of conference connexions in a computer-controlled communication system, especially a key telephone system
Méthode de réalisation de connexions de conférence dans un système de communication commandé par ordinateur, en particulier un système de communication à touches

(30) Priorität: 18.08.1988 DE 3828105
(43) Veröffentlichungstag der Anmeldung: 28.02.1990
(73) Patentinhaber: SIEMENS AKTIENGESELLSCHAFT, 80333 München (DE)
(72) Erfinder: Böttger, Detlev, D-5840 Schwerte 4 (DE); Roth, Roland, D-9650 Gelsenkirchen (DE)

(56) Entgegenhaltungen:
- US-A- 4 150 259
- US-A- 4 550 224
- TN NACHRICHTEN, Nr. 89, 1986, Seiten 37-49, Frankfurt/Main, DE; M. STEUER: "Das Kommunikationssystem Intergral 2"
- TELCOM REPORT, Sonderheft, 1985, Seiten 38-43, Berlin, DE; L. LISKE et al.: "Die digitalen Sprachterminals HICOM 211 und HICOM 260"

## Beschreibung

Die Erfindung betrifft ein Verfahren zur Durchführung einer Konferenzverbindung in einem Kommunikationssystem, insbesondere einem Key-Kommunikationssystem, mit zentraler Steuerrechnereinheit, mit einem Programmspeicher, einem u. a. Anlagenkonfigurationsdaten enthaltenden Arbeitsspeicher und einem benutzerindividuelle Daten enthaltenden Kundendatenspeicher, mit einer Koppeleinrichtung, an die Sprachendgeräte mit unterschiedlicher Anschlußart und gegebenenfalls unterschiedlichem Wahlverfahren anschließbar sind und mit einem Anlagenkomponenten verbindenden Systembus.

Neuzeitliche Kommunikationssysteme sind nicht nur zur eigentlichen Vermittlungssteuerung, sondern auch zu einer Steuerung bzw. Realisierung zusätzlicher, über den Vermittlungsvorgang hinausgehender Steuervorgänge befähigt. Weiterhin sind sie durch ihre Flexibilität im Einsatz von unterschiedlichen Sprachendgeräten gekennzeichnet. So lassen sich beispielsweise Teilnehmerendgeräte einsetzen, die sich in ihrer Anschlußart und gegebenenfalls auch in ihrem Wahlverfahren unterscheiden. Es können z. B. Endgerätetypen mit Impulswahl bzw. mit Mehrfrequenzcodewahl eingesetzt werden und es kann neben einem zweiadrigen Anschluß eine Anschlußart vorgesehen werden, bei der neben einer der Übertragung von Nutzinformationen dienenden Nutzverbindung zusätzlich eine für den digitalen Datenaustausch zwischen dem Endgerät und der Steuerrechnereinheit dienende Steuerverbindung vorgesehen ist (Key-Endgeräte). Durch die Wahl bestimmter Ziffern bzw. Ziffernkombinationen und/oder durch die Betätigung sogenannter Funktionstasten kann die Einleitung bestimmter Leistungsmerkmale entweder bei Belegen der Vermittlungseinrichtung oder aber während einer bereits bestehenden Gesprächsverbindung erfolgen. Zu solchen Leistungsmerkmalen zählen beispielsweise akustische Hinweise für wartende Teilnehmer, die Verhinderung unerwünschter Verbindungen, die selbsttätige Rufweiterleitung und die Herstellung einer Konferenzverbindung. Bei der Realisierung dieses letztgenannten Leistungsmerkmals wird eine Gesprächsverbindung zwischen mindestens drei Teilnehmern hergestellt. Hierzu sind bisher komplexe und verhältnismäßig aufwendige leistungsmerkmalspezifische Programmprozeduren notwendig. Es muß zunächst eine erste Gesprächsverbindung aufgebaut sein, damit nach gesonderter Übermittlung eines auf die Konferenz hinweisenden Kennzeichens über Rückfrageverbindungen und einer mit Ausnahme des einleitenden Teilnehmers für jeden anderen Teilnehmer zwischenzeitlich vorgenommenen Überführung in den Haltezustand die Konferenzverbindung herstellbar ist. Dieses Verfahren zur Durchführung von Konferenzverbindungen ist z.B. aus der Patentschrift US-A-4 150 259 bekannt.

Es ist die Aufgabe der Erfindung, in Zusammenhang mit einzuleitenden Konferenzverbindungen die Betriebsmöglichkeiten zu verbessern und die Bedienprozeduren zu vereinfachen.

Das wird für ein Verfahren der eingangs genannten Art dadurch erreicht, daß eine im Zustand des Verbindungsaufbaus oder im Zustand einer bereits durchgeschalteten Gesprächsverbindung erfolgende Abgabe mindestens einer weiteren Wahlinformation von einer diese Information auswertenden zentralen Steuerrechnereinheit als ein Befehl für die Einleitung einer Konferenzverbindung zu den damit jeweils gekennzeichneten Teilnehmerendgeräten gewertet wird und, daß, falls es der Verbindungszustand zuläßt, zu jedem dieser Teilnehmerendgeräte die Rufinformation abgesetzt wird und, daß nach dem Melden eines gerufenen Teilnehmers dieser als Konferenzteilnehmer hinzugeschaltet wird und, daß - unabhängig davon, welcher der an einer solchen Konferenzverbindung beteiligten Teilnehmer diese Konferenz eingeleitet hat - jeder der an der Konferenzverbindung beteiligten Teilnehmer die Hinzuschaltung eines oder mehrerer anderer Teilnehmer als weitere Konferenzteilnehmer durch die Abgabe der jeden Teilnehmer jeweils kennzeichnenden Wahlinformation bewirken kann, sofern eine für das Kommunikationssystem für eine Konferenzverbindung jeweils vorgegebene Gesamtanzahl von Teilnehmern nicht überschritten wird.

Es ist also erfindungsgemäß in vorteilhafter Weise möglich, auch unmittelbar nach der Einleitung einer Verbindung durch einfache Abgabe einer Wahlinformation, die im einfachsten Fall durch die Betätigung einer entsprechenden Teilnehmertaste möglich ist, weitere Teilnehmer festzulegen, die dann unter Umwandlung der ursprünglichen Zweierverbindung in eine Konferenzverbindung als Konferenzteilnehmer hinzugeschaltet werden. Diese Vereinfachung ergibt sich grundsätzlich unabhängig von der Art des für den Teilnehmer vorgesehenen Sprachendgerätes. Ein besonderer Vorteil liegt auch darin, daß nicht nur der eine Konferenzverbindung einleitende Teilnehmer weitere Teilnehmer in eine Konferenz einbinden kann, sondern daß diese Möglichkeit für jeden anderen an einer solchen Konferenzverbindung beteiligten Teilnehmer in gleicher Weise ohne zusätzliche weitere Zuschalteprozedur besteht.

Wird das Endgerät als spezielles Key-Endgerät derart angeschlossen, daß neben einer zur Übertragung von Nutzinformationen dienenden Nutzverbindung zusätzlich noch eine für den digitalen Datenaustausch zwischen der Steuerrechnereinheit und dem Endgerät dienende Steuerverbindung vorgesehen ist, so wird gemäß einer Weiterbildung der Erfindung eine Konferenzverbindung ausschließlich durch die eingetastete Wahlinformation ohne zusätzliche prozedurale Handhabung angefordert und von der Steuerrechnereinheit die Verbindung hergestellt. Die Wahlinformation kann durch die Betätigung der einem gewünschten Teilnehmer zugeordneten Teilnehmertaste abgegeben werden. Werden mehr als eine Teilnehmertaste betätigt, so wird durch die Steuerrechnereinheit die Konferenzverbindung zwischen den damit gekennzeichneten Teilnehmern aufgebaut. Diese Betätigung der Namenstasten kann unmittelbar zeitlich hintereinander erfolgen.

Gemäß einer Weiterbildung der Erfindung bewirkt die bei einer bestehenden Gesprächsverbindung von einem der beteiligten Teilnehmer abgegebene Wahlinformation zur gewünschten Hinzunahme eines weiteren Konferenzteilnehmers nach dem Erkennen ihrer Vollständigkeit die Einspeisung eines prägnanten Aufmerksamkeitstones. Durch diese akustische Signalisierung werden also die übrigen Konferenzteilnehmer darauf hingewiesen, daß ein weiterer Teilnehmer hinzugeschaltet werden soll.

Das tatsächlich erfolgte Zuschalten dieses gewünschten Teilnehmers bewirkt dann ebenfalls einen auf diesen Vorgang hinweisenden kurzen Aufmerksamkeitston.

Erfolgt die Anschaltung des Endgerätes neben der Nutzverbindung über eine zusätzliche Steuerverbindung, so wird die Identität jedes an der Konferenzverbindung beteiligten Teilnehmers aufgrund der von der Rechnersteuerung an die jeweiligen Endgeräte übertragenen Information auf dem dem Endgerät zugehörigen Display angezeigt.

Gemäß einer Weiterbildung der Erfindung wird die interne Konferenzverbindung mit dem Auflegen des vorletzten Teilnehmers der insgesamt daran beteiligten Teilnehmer ausgelöst. Für den letzten Teilnehmer wird durch die Steuerrechnereinheit Besetztton angelegt.

Das erfindungsgemäße Verfahren wird nachstehend anhand einer Figur erläutert.

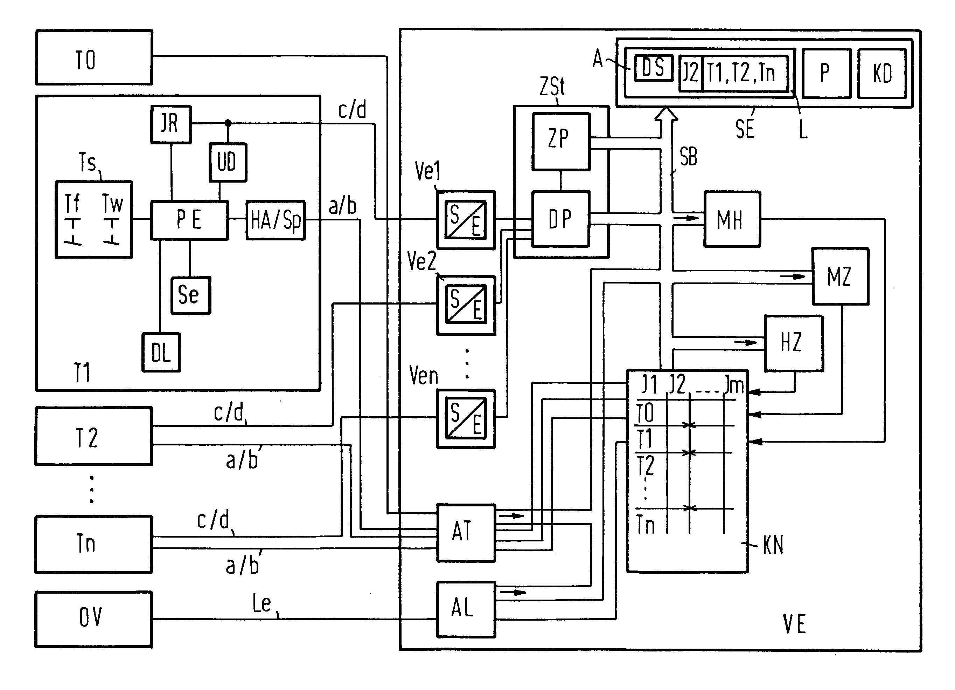

Die Figur zeigt im Blockschaltbild ausgewählte Funktionseinheiten eines Kommunikationssystems in Form einer Fernsprechvermittlungsanlage VE, an die Teilnehmerendeinrichtungen T0...Tn angeschlossen sind. Dieser Anschluß erfolge im Ausführungsbeispiel bei einer Vermittlungsanlage, der die analoge Sprachübertragung zugrundeliegt, sternförmig und mit Ausnahme der Endeinrichtung T0 für die Endeinrichtungen T1...Tn jeweils über eine vieradrige Anschlußleitung, die aus einem Sprechadernpaar a/b und einem Signalisierungsadernpaar c/d besteht. Bei einem ausschließlich digitalen System wären die Steuerverbindung und die für die Übertragung der Sprachinformation vorgesehene Nutzverbindung auf einer zweiadrigen Anschlußleitung realisierbar, wobei dann mindestens ein Nutzkanal und ein Steuerkanal für jede Endeinrichtung durch eine bestimmte Zeitlage realisiert werden kann. Zur im wesentlichen prozeduralen Anpassung werden die Teilnehmerendeinrichtungen T0...Tn über eine Anschalteeinheit AT, die die Rufanschaltung beinhaltet, mit der elektronischen Koppeleinrichtung KN verbunden. Für die zu einer öffentlichen Vermittlungsstelle 0V oder zu einem privaten Netz führenden Leitungen Le erfolgt die Verbindung über eine Anschalteeinheit AL. Die Steuerungsaufgaben der Anlage VE übernimmt die zentrale Rechnersteuerung ZSt, die über einen Systembus SB mit einer Speichereinheit SE, der Anschalteeinheit AT, der Koppeleinrichtung KN und weiteren Systemkomponenten, wie beispielsweise einer für die Bildung von Mehrfrequenzcodezeichen dienenden Einheit MZ und einer für die Erzeugung der Hörtöne zuständigen Einheit HZ, verbunden ist. Die Aufgaben der zentralen Rechnersteuerung sind im Ausführungsbeispiel auf zwei Prozessoren verteilt. Der Prozessor ZP dient beispielsweise der vermittlungs- und betriebstechnischen Steuerung. Durch den Prozessor DP erfolgt unter Einschaltung einer ein Sendeteil S und ein Empfangsteil E enthaltenden Verarbeitungseinheit Ve die Signalisierungsbearbeitung. Solche Verarbeitungseinheiten Ve1...Ven sind jeweils einem Signalisierungsadernpaar c/d zugeordnet.

Die Prozessoren ZP und DP haben über den Systembus SB Zugriff zu den in der Speichereinrichtung SE abgelegten Daten. Die Speichereinrichtung SE besteht aus einem Arbeitsspeicher A, einem Programmspeicher P und einem Kundendatenspeicher KD. Der Arbeitsspeicher A dient unter anderem der Aufnahme von Anlagenkonfigurationsdaten. Im Programmspeicher P sind das Anlagenbetriebsprogramm und die zu ihm gehörenden betriebstechnischen Daten abgespeichert. In dem Speicherteil KD sind die Kundendaten, wie z. B. die den einzelnen Teilnehmerendeinrichtungen T1...Tn zugeteilten Berechtigungen abgelegt. Das Konfigurieren dieser Daten kann z. B. über die Eingabetastatur einer als Betriebsterminal festlegbaren Endeinrichtung T1...Tn oder über ein gegebenenfalls vorgesehenes eigenständiges Betriebsterminal erfolgen.

Als Teileinheit des Arbeitsspeichers A können in einem gesonderten Speicherteil diejenigen Informationen abgelegt sein, die als vermittlungstechnische Informationen auf einem an der Endeinrichtung angeordneten Display DL dargestellt werden sollen. Die jeweils aktuellen Signalisierungsinformationen werden abhängig von dem vermittlungstechnischen Zustand durch die zentrale Rechnersteuerung ZSt festgelegt und aus dem Speicher DS der jeweiligen Endeinrichtung T1...Tn übermittelt. Stellt die Vermittlungsanlage VE ein Key-Kommunikationssystem dar, so kann die der jeweiligen Endeinrichtung übermittelte Information beispielsweise eine Aussage über den Belegungszustand einer Leitung Le und/oder der übrigen Endeinrichtungen beinhalten. Auf diesem Display DL sind auch die im Zusammenhang mit dem Aufbau und dem Umkoppeln einer Verbindung für den Teilnehmer bestimmten Hinweise darzustellen. So können beispielsweise die für eine optische Bedienerführung vorgesehenen kurzen Informationstexte auf diesem Display DL angezeigt werden.

Für die Teilnehmerendeinrichtung T1 sind in der Figur einzelne Funktionskomponenten dargestellt. Über das jeweilige a/b-Adernpaar werden Sprachinformationen übertragen. Mit diesen Sprechadern ist die Sprechschaltung Sp verbunden. Sie dient im Zusammenhang mit dem Handapparat HA der Verarbeitung der übertragenen Sprachinformationen und bildet den Leitungsabschluß.

Mit der Einheit Ts ist schematisch eine Tastatur dargestellt, die mit einer in jeder Endeinrichtung T1...Tn zur Steuerung ihrer Funktionen vorhandenen und z. B. durch einen Prozessor realisierten Steuereinheit PE gekoppelt ist. Die Taste Tw symbolisiert eine übliche Wähltastatur. Die Taste Tf steht für eine Reihe von weiteren Tasten, insbesondere sogenannten Funktionstasten, durch deren Betätigung jeweils bestimmte Funktionsabläufe aktiviert werden können. Hierzu gehören mittels des Anlagenbetriebsprogrammes realisierbare Leistungsmerkmale, wie z. B. das Leistungsmerkmal "Konferenzverbindung". Den Funktionstasten Tf können bestimmte Funktionen fest zugeordnet sein oder alternativ hierzu frei zugeordnet werden.

Mit der Steuereinheit PE sind ferner die Einheiten IR, UD, Se und DL verbunden. Die Einheit IR erkennt die Betätigung einzelner Tasten Tw, Tf, bildet entsprechende Signalisierungsinformationen und gibt diese über die Signalisierungsadern c/d an die Vermittlungsanlage VE oder unmittelbar an das der Teilnehmerendeinrichtung zugeordnete Display DL ab. Beispielsweise werden durch Wähltasten Tw erzeugte Anreize als Ziffern auf dem Display DL dargestellt. Die Einheit UD registriert Informationen, die einer Teilnehmerendeinrichtung über die jeweiligen c/d-Signalisierungsadern von der Vermittlungsanlage VE zur weiteren Verarbeitung zugeführt werden. Die Einheit Se ist als Speicher ausgebildet und dient beispielsweise der Aufnahme eines Betriebsprogrammes für die Steuereinheit PE und für zwischenzuspeichernde Daten.

Für die Realisierung von leistungsmerkmalspezifischen Steuerprozeduren beinhaltet die zentrale Rechnersteuerung ZSt einzelne Programmsteuerungen, die auf die in den entsprechenden Einheiten der Speichereinrichtung SE enthaltenen Steuerdaten zugreifen. So soll beispielsweise für die Vermittlungsanlage VE die Möglichkeit bestehen, eine Konferenzverbindung herzustellen. Eine solche Gesprächsverbindung mit mindestens drei Teilnehmern kann entweder während des Verbindungsaufbaus einer von einem Teilnehmer angeforderten Zweierverbindung oder während einer bereits bestehenden Verbindung eingeleitet werden. Wird beispielsweise von einem Teilnehmer, nachdem er sein Endgerät in den Bereitzustand geschaltet hat und ihm der Hörton übermittelt wurde, nach einer ersten Teilnehmerrufnummer unmittelbar anschließend mindestens eine weitere Teilnehmerrufnummer eingewählt, so wird dies von der diesen Sachverhalt erkennenden Rechnersteuerung ZSt als Befehl für den Aufbau einer Konferenzverbindung zwischen diesen Teilnehmern gewertet. Unter der Voraussetzung, daß das betreffende Endgerät ein Ziffern-, Funktions- und Teilnehmertasten aufweisendes Endgerät T1 darstellt, können also die der Rufnummer entsprechenden Zifferntasten oder stattdessen die den einzelnen gewünschten Teilnehmern zugeordneten Teilnehmertasten betätigt werden. Aufgrund der über die Signalisierungsader c/d übermittelten Signalisierungsinformation werden nach dem Erkennen ihrer Vollständigkeit die eingegebenen Teilnehmerrufnummern in einer dem einleitenden Teilnehmer T1 im Arbeitsspeicher A zugeordneten Speicherbereich L in Form einer Liste eingetragen. Für diesen Teilnehmer wird außerdem ein Internweg, beispielsweise der Internweg I2, von den schematisch für die Koppeleinrichtung KN dargestellten möglichen Internwegen I1...Im reserviert. Über die jeweilige Anschalteeinheit AT wird für die angewählten Teilnehmer das Rufsignal angeschaltet. Bei einem Abheben des Handapparates oder bei Durchführung einer diesem Abheben entsprechenden Handhabung durch den gerufenen Teilnehmer an seinem Endgerät wird geprüft, welchen der möglichen Internwege der die Konferenzverbindung einleitende Teilnehmer belegt hat. Der sich meldende Teilnehmer wird dann jeweils auf diesen internen Weg durch die Betätigung des entsprechenden Matrixpunktes eines Koppelvielfaches aufgeschaltet. Diese Aufschaltung soll, wie es beispielsweise in vereinfachter Form für die Koppeleinrichtung KN dargestellt ist, für die Teilnehmer T1, T2 und Tn erfolgen, so daß diese über den Internweg I2 unter Einbeziehung der Anschalteeinheit AT miteinander zu einer Konferenz verbunden sind. Die ursprünglich für den einleitenden Teilnehmer erstellte Rufliste wird insoweit korrigiert als gewünschte Teilnehmer, die sich nach der Abgabe einer vorbestimmten Anzahl von Rufsignalen nicht melden, gelöscht werden. Es verbleibt in dem Speicherbereich L lediglich die Abspeicherung der tatsächlich miteinander verbundenen Teilnehmer bzw. deren Anzahl, wobei dann gleichzeitig in einem weiteren Speicherplatz die Information über den in Anspruch genommenen Internweg abgespeichert ist. Es wird also eine Liste im Arbeitsspeicher angelegt, die ein Abbild des physikalischen Zustandes ist. Es erfolgt also in äußerst einfacher Weise ein Konferenzaufbau, ohne explizit eine Zuschalteprozedur vornehmen zu müssen. Unter der Voraussetzung, daß die Impedanz mit der daraus folgenden Dämpfung die jeweiligen postalischen Bestimmungen erfüllt, ist keine besondere Impedanzanpassung beim Melden oder Trennen der einzelnen Konferenzteilnehmer erforderlich, sofern die Herstellung einer Konferenzverbindung auf eine vorgegebene maximale Anzahl von Teilnehmern beschränkt ist. Es sind also keine Maßnahmen zur Bildung eines besonderen Konferenzsatzes und für den Dämpfungsausgleich erforderlich.

Legt der einleitende Teilnehmer wieder auf, bevor sich einer der mindestens drei von ihm gewünschten anderen Teilnehmer gemeldet hat, so wird für diese in der Liste der zu rufenden Teilnehmer eingetragenen Teilnehmer die Abschaltung des anliegenden Rufsignals veranlaßt. Meldet sich der erste gerufene Teilnehmer, so bleibt bis zum Erreichen der vorgegebenen Anzahl von Rufzyklen die Rufanschaltung für die anderen Teilnehmer davon unberührt. Sie werden dann in der Reihenfolge ihres Meldens zu der dann bereits bestehenden Verbindung hinzugeschaltet, wobei durch die Ansteuerlogik die für die betreffenden Teilnehmer zu dem gleichen Internweg führenden Koppelpunkte geschaltet werden.

Auch während einer bestehenden Gesprächsverbindung kann bei einer Zweierverbindung durch die Abgabe einer Wahlinformation durch einen daran beteiligten Teilnehmer daraus eine Konferenzverbindung hergestellt werden, bzw. es kann bei einer bestehenden Konferenzverbindung ein weiterer Teilnehmer durch die Eingabe der ihn kennzeichnenden Wahlinformation hinzugeschaltet werden. Diese Wahlinformation kann z. B. jeweils durch die Betätigung der dem betreffenden Teilnehmer zugeordneten Namenstaste vorgenommen werden. Vom System wird jedoch hinsichtlich der Teilnehmeranzahl nur eine Konferenzverbindung akzeptiert, bei der eine vorgegebene maximale Anzahl von z. B. vier Teilnehmern nicht überschritten wird. Solange dies nicht der Fall ist, kann jeder an einer Konferenzverbindung beteiligte Teilnehmer in der geschilderten Weise durch einfache Abgabe der Teilnehmerrufnummer bzw. Abgabe eines diesen Teilnehmer festlegenden Kennzeichens einen oder mehrere weitere Teilnehmer hinzuschalten. Hierfür ist dann keine zusätzliche Zuschalteprozedur erforderlich. Hinsichtlich der Beendigung der Konferenzverbindung bzw. hinsichtlich der Rufabschaltung können unterschiedliche Abläufe vorgesehen sein. Tritt einer der Konferenzteilnehmer, der einen weiteren Teilnehmer angefordert hat, aus der Konferenzverbindung aus, so kann bei jedem angeforderten Teilnehmer der Ruf abgeschaltet werden. Es kann jedoch auch vorgesehen sein, daß das Rufsignal bestehen bleibt und der bzw. einer der verbleibenden Teilnehmer als einleitender Teilnehmer geführt wird. Ihm wird dann die im Speicherbereich L des Arbeitsspeichers A abgelegte Rufliste zugeordnet.

Sowohl das Rufen eines Teilnehmers als auch das tatsächlich erfolgende Hinzuschalten eines angeforderten Teilnehmers zu einer bestehenden Gesprächsverbindung kann durch die Einspeisung eines bestimmten unterschiedlichen Aufmerksamkeitstones quittiert werden. Damit werden die an einer Gesprächsverbindung beteiligten Teilnehmer auf diesen jeweiligen Vorgang akustisch hingewiesen. Außerdem kann durch die zentrale Rechnersteuerung ZSt über die Signalisierungsadern c/d zu den jeweiligen Endgeräten eine Information übermittelt werden, aufgrund der die jeweils an einer Konferenzverbindung beteiligten anderen Teilnehmer auf dem Display DL angezeigt werden. "Teilnehmer" kann "Teilnehmerstelle" oder synonym hierzu "Teilnehmerendgerät" bedeuten.

Das Trennen einer Konferenzverbindung kann in der Weise erfolgen, daß die Internverbindung erst dann ausgelöst wird, wenn an der vorletzten Teilnehmerstelle aufgelegt wurde. Die letzte Teilnehmerstelle erhält dann Besetztton.

Neben den vieradrig angeschlossenen Key-Teilnehmerendgeräten T1...Tn können auch sogenannte Normalfernsprechgeräte, für die das Endgerät T0 steht, angeschlossen werden. Auch von einem solchen Gerät aus kann durch Einwahl der betreffenden Teilnehmernummer ein Teilnehmer eine Konferenzverbindung aufbauen bzw. die Hinzuschaltung eines oder mehrerer Teilnehmer zu einer Konferenzverbindung veranlassen. Abhängig von dem diesem Endgerät unterlegten Wahlverfahren ist dann jedoch beispielsweise zur Anforderung eines sogenannten Codeempfängers bei der MFV-Wahl mit Tasten vorab eine Signaltaste zu betätigen. Jedoch ist das System bei einem Normalfernsprechgerät mit Impulswahl jederzeit wahlaufnahmebereit. Solche Normalfernsprechgeräte, die im Gegensatz zu einem Key-Fernsprechendgerät nicht durch eine abgegebene Quittung erkannt werden, sind im Kundendatenspeicher entsprechend eingetragen.

## Patentansprüche

1. Verfahren zur Durchführung einer Konferenzverbindung in einem Kommunikationssystem (VE), insbesondere einem Key-Kommunikationssystem mit zentraler Steuerrechnereinheit (ZSt), mit einem Programmspeicher (P), einem unter anderem Anlagenkonfigurationsdaten enthaltenden Arbeitsspeicher (A) und einem benutzerindividuelle Daten enthaltenden Kundendatenspeicher (KD), mit einer Koppeleinrichtung (KN), an die Sprachendgeräte (T0...Tn) mit unterschiedlicher Anschlußart und gegebenenfalls unterschiedlichem Wahlverfahren anschließbar sind und mit einem Anlagenkomponenten verbindenden Systembus (SB),
**dadurch gekennzeichnet,**
daß eine im Zustand des Verbindungsaufbaus oder im Zustand einer bereits durchgeschalteten Gesprächsverbindung erfolgende Abgabe mindestens einer weiteren Wahlinformation von einer diese Information auswertenden zentralen Steuerrechnereinheit (ZSt) als ein Befehl für die Einleitung einer Konferenzverbindung zu den damit jeweils gekennzeichneten Teilnehmerendgeräten gewertet wird und, daß, falls es der Verbindungszustand zuläßt, zu jedem dieser Teilnehmerendgeräte die Rufinformation abgesetzt wird und, daß nach dem Melden eines gerufenen Teilnehmers dieser als Konferenzteilnehmer hinzugeschaltet wird und, daß - unabhängig davon, welcher der an einer solchen Konferenzverbindung beteiligten Teilnehmer diese Konferenz eingeleitet hat - jeder der an der Konferenzverbindung beteiligten Teilnehmer die Hinzuschaltung eines oder mehrerer Teilnehmer als weitere Konferenzteilnehmer durch die Abgabe der jeden Teilnehmer jeweils kennzeichnenden Wahlinformation bewirken kann, sofern eine für das Kommunikationssystem (VE) für eine Konferenzverbindung jeweils vorgegebene Gesamtanzahl von Teilnehmern nicht überschritten wird.

2. Verfahren nach Anspruch 1,
**dadurch gekennzeichnet,**
daß bei Vorhandensein eines Endgerätes (T1), für dessen Anschluß ein der Übertragung von Nutzinformationen dienende Nutzverbindung (a/b) und zusätzlich eine für den digitalen Datenaustausch zwischen der Steuerrechnereinheit (ZSt) und dem Endgerät (T1) dienende Steuerverbindung (c/d) vorgesehen ist, die Anforderung eines Konferenzteilnehmers ausschließlich durch die eingetastete Wahlinformation ohne zusätzliche prozedurale Handhabung erfolgt.

3. Verfahren nach Anspruch 1 bzw. 2,
**dadurch gekennzeichnet,**
daß die bei einer bestehenden Gesprächsverbindung von einem der beteiligten Teilnehmer abgegebene Wahlinformation zur gewünschten Hinzunahme eines weiteren Teilnehmers nach dem Erkennen ihrer Vollständigkeit die Einspeisung eines prägnanten Aufmerksamkeitstones bewirkt.

4. Verfahren nach Anspruch 1 bzw. 2,
**dadurch gekennzeichnet,**
daß das erfolgte Melden des als Konferenzteilnehmer hinzugeschalteten gewünschten Teilnehmers die Einspeisung eines auf diesen Vorgang hinweisenden kurzen Aufmerksamkeitstones bewirkt.

5. Verfahren nach Anspruch 2,
**dadurch gekennzeichnet,**
daß bei einer Anschaltung des Endgerätes über eine zusätzliche Steuerverbindung (c/d) die Identität jedes an der Konferenzverbindung beteiligten Teilnehmers aufgrund der von der Rechnersteuerung (ZSt) an die jeweiligen Endgeräte (T1...Tn) übertragenen Information auf dem dem Endgerät zugehörigen Display (DL) jeweils die weiteren Konferenzteilnehmer angezeigt werden.

6. Verfahren nach Anspruch 1,
**dadurch gekennzeichnet,**
daß die interne Konferenzverbindung mit dem Auflegen des vorletzten Teilnehmers der insgesamt daran beteiligten Teilnehmer ausgelöst wird und daß für den letzten Teilnehmer Besetztton angelegt wird.

## Claims

1. A method for establishing a conference connection in a communication system (VE), particularly a key-type communication system with a central processor (ZSt), with a program memory (P), a main memory (A) containing, among other things, system configuration data, and a customer data memory (KD) containing user-individual data, with a switching device (KN) to which voice terminals (T0...Tn) with different type of connection and possibly different dialling method can be connected, and with a system bus (SB) connecting system components, characterised in that an output delivery, taking place in the state of connection establishment or in the state of a call connection already switched through, of at least one further dialling information item is evaluated by a central processor (ZSt), evaluating this information item, as a command for initiating a conference connection to the subscriber terminals in each case identified thereby and that, if committed by the state of the connection, the ringing information is delivered to each of these subscriber terminals and that after a called subscriber has answered, this subscriber is added as conference party and that - independently of which subscriber involved in such a conference connection has initiated this connection - each of the subscribers involved in the conference connection can effect the adding of one or a number of subscribers as further conference parties by outputting the dialling information item in each case identifying each subscriber if a total number of parties in each case predetermined for a conference connection for the communication system (VE) is not exceeded.

2. Method according to Claim 1, characterised in that when a terminal (T1) is present, for the connection of which a useful connection (a/b) used for transmitting useful information items and additionally a control connection (c/d) used for exchanging digital data between the control processor (ZSt) and the terminal (T1) is provided, the request of a conference party is exclusively carried out by the dialling information item keyed in, without additional procedural handling.

3. Method according to Claim 1 or 2, characterised in that the dialling information item for the desired addition of a further party, output by one of the parties involved in an existing call connection, produces the feeding-in of a distinct attention tone after its completeness has been detected.

4. Method according to Claim 1 or 2, characterised in that the completed signalling of the desired party added as conference party effects the feeding-in of a short attention tone indicating this event.

5. Method according to Claim 2, characterised in that when the terminal is connected via an additional control connection (c/d), the identity of each party involved in the conference connection is indicated on the display (DL) associated with the terminal on the basis of the information transmitted by the central processor (ZSt) to the respective terminals (T1...Tn).

6. Method according to Claim 1, characterised in that the internal conference connection is released with the penultimate party of the parties involved therein overall going on hook and that busy tone is applied for the last party.

## Revendications

1. Procédé pour réaliser une liaison de conférence dans un système de communication (VE), notamment un système de communication à codes comportant une unité centrale formant ordinateur de commande (ZSt), une mémoire de programmes (P), une mémoire de travail (A) contenant notamment des données de configuration de l'installation et une mémoire de données de clients (KD), contenant des données individuelles aux utilisateurs, un dispositif de couplage (KN), auquel sont raccordés des terminaux vocaux (T0...Tn) possédant des types de raccordement différents et éventuellement des procédures de sélection différentes, et un bus système (SB) reliant des composants de l'installation,
caractérisé par le fait
qu'une délivrance d'au moins une autre information de sélection, qui s'effectue dans l'état d'établissement d'une liaison ou dans l'état d'une liaison de conversation déjà interconnectée, par une unité centrale formant calculateur de commande (ZSt), qui évalue cette information, est évaluée en tant qu'instruction pour le déclenchement d'une liaison de conférence avec les terminaux d'abonnés respectivement caractérisés de ce fait, que dans le cas où l'état de la liaison le permet, l'information d'appel est envoyée à chacun de ces terminaux d'abonnés et qu'après la signalisation d'un abonné appelé, ce dernier est raccordé en supplément en tant que participant à la conférence, que - indépendamment de celui des abonnés participant à une telle liaison de conférence, qui a déclenché cette conférence - chacun des abonnés participant à la liaison de conférence peut raccorder en suplément un ou plusieurs abonnés en tant qu'autres participants à la conférence grâce à la délivrance de l'information de sélection caractérisant respectivement chaque abonné, dans la mesure où un nombre total d'abonnés, respectivement prédéterminé pour le système de communication (VE) pour une liaison de conférence, n'est pas dépassé.

2. Procédé suivant la revendication 1, caractérisé par le fait que dans le cas de la présence d'un terminal (T1), pour le raccordement duquel il est prévu une liaison utile (a/b) utilisée pour la transmission d'informations utiles et, en outre, une liaison de commande (c/d) qui sert à réaliser l'échange numérique de données entre l'unité formant calculateur de commande (ZSa) et le terminal (T1), la demande d'un participant à la conférence s'effectue exclusivement au moyen de l'information de sélection introduite ou d'une manipulation selon une procédure supplémentaire.

3. Procédé suivant la revendication 1 ou 2, caractérisé par le fait que l'information de sélection délivrée par l'un des abonnés participants lors d'une liaison de conversation existante, pour le raccordement supplémentaire souhaité d'un autre abonné, réalise, après identification de l'état complet de cette information, l'introduction d'une tonalité d'attention significative.

4. Procédé suivant la revendication 1 ou 2, caractérisé par le fait que la signalisation exécutée de l'abonné désiré raccordé en supplément en tant que participant à la conférence, déclenche l'introduction d'une brève tonalité d'attention indiquant cette opération.

5. Procédé suivant la revendication 2, caractérisé par le fait que dans le cas d'un raccordement du terminal par l'intermédiaire d'une liaison supplémentaire de commande (c/d), l'identité de chaque abonné, qui participe à la liaison de conférence, est affichée sur le dispositif d'affichage (DL) associé au terminal des autres participants à la conférence, sur la base de l'information transmise par l'unité de commande à ordinateur (Zst) aux terminaux respectifs (T1...Tn).

6. Procédé suivant la revendication 1, caractérisé par le fait que la liaison de conférence interne est déclenchée lorsque le dernier abonné de l'ensemble des abonnés participant à la liaison a raccroché et qu'une tonalité d'occupation est appliquée pour le dernier abonné.
